# FASCICULE DE BREVET EUROPEEN

(11) **EP 2 757 236 B1**
(45) Date de publication et mention de la délivrance du brevet: **18.03.2015**
(21) Numéro de dépôt: 14000059.7
(22) Date de dépôt: 09.01.2014
(51) Int. Cl.: F02C 6/20, F02C 7/26, F02C 9/00, B64D 45/00

(54) **Système de surveillance du démarrage d'un aéronef à voilure tournante, aéronef et procédé mettant en oeuvre ce système**
System zur Überwachung des Start eines Drehflügelflugzeugs, Flugzeuge und Verfahren für die Implementierung dieses Systems
System for monitoring the start of a rotary wing aircraft, aircraft and method implementing this system

(30) Priorité: 16.01.2013 FR 1300081
(43) Date de publication de la demande: 23.07.2014
(73) Titulaire: Airbus Helicopters, 13725 Marignane Cedex (FR)
(72) Inventeur: Massot, Lucie, F-13100 AIX-EN-Provence (FR)
(74) Mandataire: GPI & Associés

(56) Documents cités:
- GB-A- 2 193 535
- US-A- 5 046 923
- US-A1- 2005 278 084

## Description

La présente invention concerne un système de surveillance du démarrage d'un d'aéronef à voilure tournante. L'invention concerne aussi un aéronef à voilure tournante muni d'un tel système et un procédé de démarrage d'un turbomoteur mettant en oeuvre ce système de détection.

L'invention se situe donc dans le domaine des dispositifs de surveillance des installations motrices d'aéronefs à voilure tournante.

Classiquement, un aéronef à voilure tournante comporte une installation motrice munie d'un rotor assurant au moins partiellement la sustentation de l'aéronef. Ce rotor peut aussi participer au moins partiellement à la propulsion de l'aéronef. Ainsi, un hélicoptère comporte un rotor principal assurant sa sustentation et sa propulsion.

Ce rotor est mû en rotation par une boîte de transmission de puissance entraînée par au moins un moteur.

Par exemple, l'installation motrice inclut un turbomoteur muni d'un générateur de gaz et d'une turbine libre de puissance. La turbine libre est alors liée par une chaîne mécanique de transmission de puissance à la boîte de transmission de puissance.

Cette chaîne mécanique de transmission de puissance est usuellement équipée d'une roue libre. La roue libre comporte une partie menante, mise en rotation par un moteur, et une partie menée reliée à la boîte de transmission de puissance.

Une telle roue libre a pour fonction de permettre l'entraînement du rotor par le moteur et d'interdire a contrario l'entraînement du moteur par la chaîne mécanique de puissance. La roue libre peut notamment présenter un intérêt durant une phase d'autorotation de la voilure tournante par exemple.

Une telle roue libre est susceptible de se dégrader au cours de son utilisation. Dès lors, la roue libre dégradée peut glisser, en étant le siège d'un glissement mécanique entre deux constituants.

Par exemple, la roue libre peut comporter des rouleaux interposés entre la partie menante et la partie menée. Les rouleaux permettent alors l'entraînement de la partie menée par la partie menante. Toutefois, ces rouleaux peuvent s'éroder et ne plus remplir correctement leur fonction.

Au démarrage du moteur, une roue libre usée peut provoquer une rupture mécanique dans la chaîne mécanique de puissance. Si la partie menante de la roue libre n'entraîne plus la partie menée, le moteur risque alors de se trouver dans une situation de survitesse de sa turbine libre. Si la transmission mécanique entre la partie menante et sa partie menée est aléatoire, le moteur peut subir des à-coups mécaniques en cas de crabotage soudain des parties menante et menée.

Le glissement de la roue libre peut aussi induire une usure anormale d'éléments mécaniques présents entre le moteur et le rotor de la voilure tournante, suite à des à-coups répétés par exemple.

Par suite, un pilote tend à effectuer une vérification visuelle de l'entraînement en rotation du rotor lors du démarrage du ou des moteurs d'un aéronef. En effet, si le rotor est mis en rotation, le pilote peut en déduire que la chaîne mécanique fonctionne correctement.

Le manuel de vol d'un aéronef peut requérir que le pilote s'assure visuellement de la rotation du rotor à partir d'un seuil de vitesse de rotation du moteur.

Si le rotor n'est pas mis en rotation, le pilote procède alors à l'arrêt du moteur.

L'arrière plan technologique éloigné du domaine de l'invention comprend les documents US4231092A, US5799748A et JP2007270770A.

Le document US 4231092 A propose un système de transmission automatique muni d'un embrayage. L'effet de la roue libre est simulé par un microprocesseur. Un glissement est détecté quand le couple en amont de l'embrayage est négatif.

Le document US 5799748 A décrit un moyen de détection de l'état courant d'un système de roue libre. Ce document ne détaille pas le cas précis de glissement de roue libre et est complètement tourné vers le domaine éloigné de l'automobile.

Le document JP 2007270770 A suggère de mesurer la vitesse de rotation du rotor pour détecter le glissement d'une roue libre.

On connaît aussi les documents US 5046923, GB 2193535 et US 2005/278084.

La présente invention a alors pour objet de proposer un système pour aéronef afin de surveiller automatiquement le démarrage d'un aéronef à voilure tournante, ce démarrage pouvant être entravé par le glissement d'une roue libre d'une installation motrice, la roue libre étant interposée entre un moteur et un rotor de sustentation voire de propulsion de l'aéronef.

Ainsi, l'invention vise un système de surveillance pour surveiller le démarrage d'un aéronef à voilure tournante, l'aéronef ayant une roue libre interposée sur une chaîne mécanique de transmission de puissance entre un turbomoteur et un rotor de la voilure tournante, le turbomoteur comportant un générateur de gaz et une turbine libre. La chaîne mécanique de transmission de puissance inclut une portion amont reliant la turbine libre à la roue libre.

Ce système de surveillance est notamment remarquable en ce qu'il comporte un premier dispositif de mesure pour mesurer en position de montage le couple exercé sur la portion amont et un deuxième dispositif de mesure pour mesurer en position de montage une vitesse de rotation dudit générateur de gaz. Le système de surveillance possède alors une unité de traitement reliée en position de montage au turbomoteur ainsi qu'au premier dispositif de mesure et au deuxième dispositif de mesure. L'unité de traitement est configurée de telle sorte que cette unité de traitement arrête automatiquement le démarrage du turbomoteur lorsque le couple est inférieur à un seuil de couple et lorsque ladite vitesse de rotation du générateur de gaz est supérieure à un seuil de vitesse.

Ce système de surveillance peut donc aussi être dénommé « système de détection de glissement d'une roue libre d'une installation motrice » dans la mesure où le système peut interrompre le démarrage du turbomoteur suite à un tel glissement.

Dès lors, le système de surveillance est un système automatique qui vérifie que le rotor de la voilure tournante est mis en rotation. Dans la négative, la vitesse de rotation du générateur augmente. A partir d'un seuil de vitesse de la vitesse de rotation du générateur de gaz, si le couple exercé sur la portion amont n'a pas atteint le seuil de couple, l'unité de traitement en déduit la présence d'un dysfonctionnement, tel qu'un glissement de ladite roue libre. L'unité de traitement requiert alors l'arrêt du démarrage du moteur.

Par conséquent, la charge de travail du pilote peut être réduite, ce pilote n'étant plus obligé de surveiller le fonctionnement du rotor.

Si la roue libre glisse au démarrage du rotor en rotation, le démarrage pourra être interrompu afin de ne pas endommager d'autres éléments mécaniques et d'éviter un incident en vol.

Par ailleurs, ce système de surveillance présente l'avantage de pouvoir être agencé aisément. Le premier dispositif de mesure et le deuxième dispositif de mesure peuvent effectivement être d'un type usuel. Par exemple, le premier système de mesure peut être un arbre couplemètre disposé sur un arbre de puissance solidaire de la turbine libre.

On entend par « arbre couplemètre », un arbre muni d'un couplemètre.

L'unité de traitement peut aussi être intégrée à un système électronique de contrôle d'un turbomoteur, connu parfois sous l'acronyme FADEC (« Full Authority Digital Engine Control » ou « Full Authority Digital Electronic Control » en langue anglaise).

Le temps de traitement des informations est alors rapide, et la chaîne de transmission d'informations étant courte et robuste.

Outre un système de surveillance, l'invention vise aussi un aéronef muni d'une voilure tournante et d'au moins un turbomoteur, cet aéronef ayant une roue libre interposée sur une chaîne mécanique de transmission de puissance entre le turbomoteur et un rotor de la voilure tournante, le turbomoteur comportant un générateur de gaz et une turbine libre, la chaîne mécanique de transmission de puissance incluant une portion amont reliant la turbine libre à la roue libre.

L'aéronef est alors muni d'un système de surveillance du type décrit précédemment.

De plus, l'invention vise un procédé de démarrage d'un turbomoteur d'un aéronef mettant oeuvre ce système de surveillance, l'aéronef étant muni d'une voilure tournante, ainsi que d'une roue libre interposée sur une chaîne mécanique de transmission de puissance entre ledit turbomoteur et un rotor de ladite voilure tournante, le turbomoteur comportant un générateur de gaz et une turbine libre, la chaîne mécanique de transmission de puissance incluant une portion amont reliant ladite turbine libre à ladite roue libre. Au cours de ce procédé :
- on mesure le couple exercé sur la portion amont avec un premier dispositif de mesure, et on mesure une vitesse de rotation dudit générateur de gaz avec un deuxième dispositif de mesure,
- on compare ledit couple à un seuil de couple et ladite vitesse de rotation à un seuil de vitesse avec une unité de traitement, et
- on arrête le démarrage dudit turbomoteur lorsque ledit couple est inférieur au seuil de couple et lorsque ladite vitesse de rotation du générateur de gaz est supérieure au un seuil de vitesse.

Le constructeur peut établir par essais ou calculs le seuil de vitesse et le seuil de couple adéquats.

L'invention et ses avantages apparaîtront avec plus de détails dans le cadre de la description qui suit avec des exemples de réalisation donnés à titre illustratif en référence aux figures annexées qui représentent :
- la figure 1, un schéma représentant un aéronef selon l'invention, et
- la figure 2, un schéma explicitant le procédé selon l'invention.

Les éléments présents dans plusieurs figures distinctes sont affectés d'une seule et même référence.

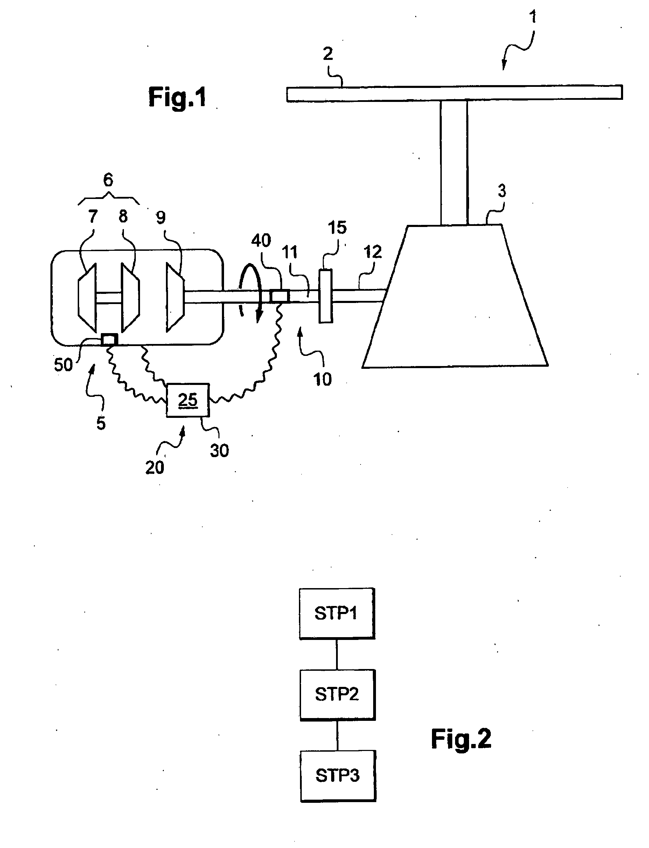

La figure 1 présente un aéronef 1 selon l'invention.

Cet aéronef 1 comporte une voilure tournante munie d'au moins un rotor 2.

Pour mettre en rotation la voilure tournante, l'aéronef 1 comporte au moins un turbomoteur 5 et une boîte de transmission de puissance 3. Le turbomoteur 5 met alors en mouvement la boîte de transmission de puissance 3 via une chaîne mécanique 10 de transmission de puissance, la boîte de transmission de puissance 3 mettant alors en rotation le rotor 2.

Le turbomoteur 5 comprend un générateur de gaz 6. Ce générateur de gaz est alors classiquement muni d'un compresseur 7 lié à une turbine haute pression 8.

De plus, le turbomoteur est pourvu d'une turbine libre 9. Les gaz provenant du générateur de gaz 6 mettent alors en rotation la turbine libre 9.

Par suite, la chaîne mécanique 10 de transmission de puissance inclut au moins un arbre reliant la turbine libre à la boîte de transmission de puissance 3. Cette chaîne mécanique 10 de transmission de puissance possède plus une roue libre 15.

Ainsi, la chaîne mécanique 10 est munie d'une portion amont 11 reliant la turbine libre 9 à une portion menante de la roue libre 15. De plus, la chaîne mécanique 10 possède une portion aval 12 reliant une portion menée de la roue libre 15 à la boîte de transmission de puissance 3. Chaque portion peut donc être munie d'au moins un arbre de transmission de puissance.

Cet aéronef 1 est alors pourvu d'un système de surveillance 20 pour surveiller l'installation au démarrage du turbomoteur.

Ce système de surveillance 20 comprend un premier dispositif de mesure 40 pour déterminer le couple exercé par le turbomoteur 5 sur la portion amont 11. Ce premier dispositif de mesure peut comprendre un arbre couplemètre.

En outre, le système de surveillance 20 comprend un deuxième dispositif de mesure 50 pour déterminer la vitesse de rotation Ng du générateur de gaz, à savoir la vitesse de rotation du compresseur 7 et/ou de la turbine haute pression 8 par exemple.

Ce deuxième dispositif de mesure 50 peut être d'un type usuel.

Dès lors, le système de surveillance 20 est muni d'une unité de traitement 25 communiquant avec le premier dispositif de mesure 40 et le deuxième dispositif de mesure 50.

L'unité de traitement peut comprendre un organe exécutant des instructions mémorisées pour appliquer le procédé implémenté. L'unité de traitement peut ainsi posséder un processeur ou équivalent et une mémoire non volatile.

Cette unité de traitement peut être un système de contrôle électronique FADEC contrôlant le turbomoteur. A titre de variante, l'unité de traitement peut être déportée et communiquer avec n'importe quel système apte à arrêter le turbomoteur pour lui transmettre un ordre d'arrêt du turbomoteur.

Dès lors, en référence à la figure 2, durant une étape de mesure STP1, on mesure en continu :
- le couple Tq exercé sur la portion amont 11 à l'aide du premier dispositif de mesure 40, et
- la vitesse de rotation Ng du générateur de gaz 6 à l'aide du deuxième dispositif de mesure 50.

Durant une étape d'évaluation STP2, l'unité de traitement 25 compare en continu le couple Tq à un seuil de couple Stq, et la vitesse de rotation Ng à un seuil de vitesse Sng.

Durant une étape de coupure STP3, l'unité de traitement 25 requiert l'arrêt du turbomoteur lorsque les deux conditions sont simultanément remplies :
- le couple Tq est inférieur au seuil de couple Stq,
- la vitesse de rotation Ng est supérieure au seuil de vitesse Sng.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

L'invention peut notamment être mise en oeuvre sur un aéronef comportant une pluralité de turbomoteurs.

## Revendications

1. Système de surveillance (20) pour surveiller le démarrage d'un aéronef (1) à voilure tournante, ledit aéronef (1) ayant une roue libre (15) interposée sur une chaîne mécanique (10) de transmission de puissance entre un turbomoteur (5) et un rotor (2) de ladite voilure tournante (1), ledit turbomoteur (5) comportant un générateur de gaz (6) et une turbine libre (9), la chaîne mécanique (10) incluant une portion amont (11) reliant ladite turbine libre (9) à ladite roue libre (15),
**caractérisé en ce que** ce système de surveillance (20) comporte un premier dispositif de mesure (40) pour mesurer en position de montage le couple (Tq) exercé sur ladite portion amont (11) et un deuxième dispositif de mesure (50) pour mesurer en position de montage une vitesse de rotation (Ng) dudit générateur de gaz (6), ledit système de surveillance (20) ayant une unité de traitement (25) reliée en position de montage au turbomoteur (5) ainsi qu'au premier dispositif de mesure (40) et au deuxième dispositif de mesure (50), l'unité de traitement étant configurée de telle sorte que cette unité de traitement arrête automatiquement le démarrage du turbomoteur (5) lorsque ledit couple (Tq) est inférieur à un seuil de couple (Stq) et lorsque ladite vitesse de rotation (Ng) du générateur de gaz est supérieure à un seuil de vitesse (Sng).

2. Aéronef (1) muni d'une voilure tournante et d'au moins un turbomoteur (5), ledit aéronef (1) ayant une roue libre (15) interposée sur une chaîne mécanique (10) de transmission de puissance entre ledit turbomoteur (5) et un rotor (2) de ladite voilure tournante, ledit turbomoteur (5) comportant un générateur de gaz (6) et une turbine libre (9), la chaîne mécanique (10) incluant une portion amont (11) reliant ladite turbine libre (9) à ladite roue libre (5),
**caractérisé en ce que** ledit aéronef (1) est muni d'un système de surveillance (20) selon la revendication 1.

3. Procédé de démarrage d'un turbomoteur (5) d'un aéronef (1) mettant oeuvre le système de surveillance (20) de la revendication 1, ledit aéronef (1) étant muni d'une voilure tournante, ledit aéronef (1) ayant une roue libre (15) interposée sur une chaîne mécanique (10) de transmission de puissance entre ledit turbomoteur (5) et un rotor (2) de ladite voilure tournante, ledit turbomoteur (5) comportant un générateur de gaz (6) et une turbine libre (9), la chaîne mécanique (10) de transmission de puissance incluant une portion amont (11) reliant ladite turbine libre (9) à ladite roue libre (15), au cours duquel :
- on mesure le couple (Tq) exercé sur ladite portion amont (11), et on mesure une vitesse de rotation (Ng) dudit générateur de gaz (6),
- on compare ledit couple (Tq) à un seuil de couple (Stq) et ladite vitesse de rotation (Ng) à un seuil de vitesse (Sng), et
- on arrête le démarrage dudit turbomoteur (5) lorsque ledit couple (Tq) est inférieur au seuil de couple (Stq) et lorsque ladite vitesse de rotation (Ng) est supérieure au seuil de vitesse (Sng).

## Patentansprüche

1. System (20) zur Überwachung des Starts eines Drehflügel-Flugzeugs (1), wobei das Flugzeug (1) einen Freilauf (15) aufweist, der in einem mechanischen Kraftübertragungsstrang (10) zwischen einem Turbomotor (5) und einem Rotor (2) des Drehflügels (1) angeordnet ist, wobei der Turbomotor (5) einen Gasgenerator (6) und eine Arbeitsturbine (9) aufweist, wobei der mechanische Kraftübertragungsstrang (10) einen vorgelagerten Bereich (11) aufweist, der die Arbeitsturbine (9) mit dem Freilauf (15) verbindet,
**dadurch gekennzeichnet, dass** das Überwachungssystem (20) eine erste Messvorrichtung (40) zum Messen des auf den vorgelagerten Teil (11) ausgeübten Drehmoments (Tq) in Einbaulage und eine zweite Messvorrichtung (50) zum Messen einer Drehgeschwindigkeit (Ng) des Gasgenerators (6) in Einbaulage aufweist, wobei das Überwachungssystem (20) eine Verarbeitungseinheit (25) aufweist, die in Einbaulage mit dem Turbomotor (5) sowie mit der ersten Messvorrichtung (40) und mit der zweiten Messvorrichtung (50) verbunden ist, wobei die Verarbeitungseinheit so ausgebildet ist, dass sie den Start des Turbomotors (5) automatisch stoppt, wenn das Drehmoment (Tq) kleiner als ein Schwellendrehmoment (Stq) ist, und wenn die Drehgeschwindigkeit (Ng) des Gasgenerators größer als ein Geschwindigkeitsschwellenwert (Sng) ist.

2. Drehflügelflugzeug (1) mit mindestens einem Turbomotor (5), wobei das Flugzeug (1) einen Freilauf (15) aufweist, der in einem mechanischen Kraftübertragungsstrang (10) zwischen dem Turbomotor (5) und einem Rotor (2) des Drehflügels angeordnet ist, wobei der Turbomotor (5) einen Gasgenerator (6) und eine Arbeitsturbine (9) aufweist, wobei der mechanische Kraftübertragungsstrang (10) einen vorgelagerten Teil (11) aufweist, der die Arbeitsturbine (9) mit dem Freilauf (5) verbindet,
**dadurch gekennzeichnet, dass** das Flugzeug (1) mit einem Überwachungssystem (20) gemäß Anspruch 1 versehen ist.

3. Verfahren zum Starten eines Turbomotors (5) eines Flugzeugs (1), welches das Überwachungssystem (20) gemäß Anspruch 1 anwendet, wobei das Flugzeug (1) mit einem Drehflügel versehen ist und einen Freilauf (15) aufweist, der in einem mechanischen Kraftübertragungsstrang (10) zwischen dem Turbomotor (5) und einem Rotor (2) des Drehflügels angeordnet ist, wobei der Turbomotor (5) einen Gasgenerator (6) und eine Arbeitsturbine (9) aufweist, wobei der mechanische Kraftübertragungsstramg (10) einen vorgelagerten Teil (11) aufweist, der die Arbeitsturbine (9) mit dem Freilauf (15) verbindet, bei dem:
- das auf den vorgelagerten Teil (11) ausgeübte Drehmoment (Tq) gemessen wird, und eine Drehgeschwindigkeit (Ng) des Gasgenerators (6) gemessen wird,
- das Drehmoment (Tq) mit einem Drehmomentschwellenwert (Stq) verglichen wird, und die Drehgeschwindigkeit (Ng) mit einem Geschwindigkeitsschwellenwert (Sng) verglichen wird, und
- das Starten des Turbomotors (5) gestoppt wird, wenn das Drehmoment (Tq) kleiner ist als der Drehmomentschwellenwert (Stq), und wenn die Drehgeschwindigkeit (Ng) größer ist als der Geschwindigkeitsschwellenwert (Sng).

## Claims

1. Monitoring system (20) for monitoring the starting of a rotary wing aircraft (1), said aircraft (1) having a freewheel (15) interposed in a drive train (10) for transmitting power between a turboshaft engine (5) and a rotor (2) of said rotary wing (1), said turboshaft engine (5) comprising a gas generator (6) and a free turbine (9), the drive train (10) including an upstream portion (11) connecting said free turbine (9) to said freewheel (15),
**characterised in that** said monitoring system (20) comprises a first measurement device (40) for measuring, in the mounted position, the torque (Tq) exerted on said upstream portion (11) and a second measurement device (50) for measuring, in the mounted position, a speed of rotation (Ng) of said gas generator (6), said monitoring system (20) having a processing unit (25) connected, in the mounted position, to the turboshaft engine (5) and also to the first measurement device (40) and to the second measurement device (50), the processing unit being configured in such a manner that said processing unit automatically stops the starting of the turboshaft engine (5) when said torque (Tq) is less than a torque threshold (Stq) and when said speed of rotation (Ng) of the gas generator is greater than a speed threshold (Sng).

2. Aircraft (1) provided with a rotary wing and at least one turboshaft engine (5), said aircraft (1) having a freewheel (15) interposed in a drive train (10) for transmitting power between said turboshaft engine (5) and a rotor (2) of said rotary wing, said turboshaft engine (b) comprising a gas generator (6) and a free turbine (9), the drive train (10) including an upstream portion (11) connecting said free turbine (9) to said freewheel (5),
**characterised in that** said aircraft (1) is provided with a monitoring system (20) according to claim 1.

3. Method of starting a turboshaft engine (5) of an aircraft (1) implementing the monitoring system (20) of claim 1, said aircraft (1) being provided with a rotary wing, said aircraft (1) having a freewheel (15) interposed in a drive train (10) for transmitting power between said turboshaft engine (5) and a rotor (2) of said rotary wing, said turboshaft engine (5) comprising a gas generator (6) and a free turbine (9), the drive train (10) for trarmmitting power including an upstream portion (11) connecting said free turbine (9) to said freewheel (15), in which method:
- the torque (Tq) exerted on said upstream portion (11) is measured, and a speed of rotation (Nq) of said gas generator (6) is measured,
- said torque (Tq) is compared with a torque threshold (Stq) and said speed of rotation (Ng) is compared with a speed threshold (Sng), and
- the starting of said turboshaft engine (5) is stopped when said torque (Tq) is less than the torque threshold (Stq) and when said speed of rotation (Ng) is greater than the speed threshold (Sng).
